# FASCICULE DE BREVET EUROPEEN

(11) **EP 0 501 899 B1**
(45) Date de publication et mention de la délivrance du brevet: **15.11.1995**
(21) Numéro de dépôt: 92440022.9
(22) Date de dépôt: 12.02.1992
(51) Int. Cl.: A01B 33/06, A01B 49/02

(54) **Herse rotative comportant plusieurs poutres support liées rigidement à une structure d'attelage perfectionnée**
Kreiselegge mit mehreren starr mit einer verbesserten Anbauvorrichtung verbundenen Tragbalken
Rotary harrow with several support beams rigidly linked to an improved stucture

(30) Priorité: 27.02.1991 FR 9102526
(43) Date de publication de la demande: 02.09.1992
(73) Titulaire: KUHN S.A., F-67700 Saverne (FR)
(72) Inventeur: Oberle, Edmond, F-67700 Haegen (FR); Kobel, Richard, F-67590 Schweighouse/Moder (FR)

(56) Documents cités:
- EP-A- 0 200 664
- EP-A- 0 264 987
- FR-A- 2 169 144
- FR-A- 2 443 187
- US-A- 4 171 725

## Description

La présente invention concerne une herse rotative comportant :
- une structure d'attelage permettant d'être liée à un véhicule moteur,
- deux poutres support s'étendant transversalement à la direction de travail et au moins sensiblement dans le prolongement l'une de l'autre, chacune de celles-ci étant liée à la structure d'attelage et supportant des rotors dont chacun est muni d'au moins un outil de travail du sol et est guidé en rotation dans ladite poutre support laquelle contient en sus des organes d'entraînement destinés à l'entraînement desdits rotors,
- un carter central fixé sur la structure d'attelage et recevant le mouvement d'une source motrice
   et
- deux carters latéraux fixés chacun sur une poutre support correspondante dans le but de transmettre aux organes d'entraînement de celle-ci le mouvement reçu du carter central,
   ladite structure d'attelage qui s'étend en partie au moins au-dessus des poutres support, comportant :
- une poutre inférieure supportant directement ou indirectement deux points d'attelage inférieurs,
- deux poutrelles inférieures fixées chacune rigidement à la poutre inférieure dans la zone d'un point d'attelage inférieur respectif et s'étendant vers l'arrière au-dessus de la poutre support correspondante qui y est liée
   et
- deux montants s'étendant vers le haut à partir de la poutre inférieure à laquelle ils sont fixés, lesdits montants étant liés rigidement entre eux à leur extrémité supérieure et supportant un point d'attelage supérieur.

Une telle herse rotative est connue dans l'état de la technique (FR-A-2 169 144). Elle comporte tout d'abord une structure d'attelage permettant d'être liée à un véhicule moteur.

Elle comporte ensuite deux poutres support s'étendant orthogonalement à la direction de travail et au moins sensiblement dans le prolongement l'une de l'autre. Chaque poutre support est liée à la structure d'attelage et supporte des rotors dont chacun est muni de deux dents et est guidé en rotation dans ladite poutre support. Celle-ci contient également des roues dentées destinées à l'entraînement des rotors.

Cette herse rotative connue comporte enfin encore :
- un carter central fixé sur la structure d'attelage et recevant le mouvement à partir de la prise de force du véhicule moteur,
   et
- deux carters latéraux fixés chacun sur une poutre support correspondante dans le but de transmettre aux roues dentées de celle-ci le mouvement reçu du carter central au moyen d'un arbre télescopique à joints universels.

La structure d'attelage qui s'étend essentiellement au-dessus des deux extrémités adjacentes des deux poutres support, comporte tout d'abord un cadre fixe, rectangulaire en vue en plan et s'étendant dans un plan horizontal. Les côtés longitudinaux du cadre sont orthogonaux à la direction de travail. Près des sommets du cadre, chacun des côtés courts de celui-ci porte des supports orthogonaux à la direction de travail et quelque peu dirigés vers le haut, entre les branches de chacun desquels peut pivoter, à l'aide de tourillons d'axes longitudinaux dirigés suivant la direction de travail, un étrier fixé sur la partie supérieure de la poutre support respective.

La structure d'attelage comporte également un cadre à trois points d'attelage destiné à être accouplé au dispositif de levage à trois points d'un véhicule moteur. Ce cadre à trois points présente deux points d'attelage inférieurs et un point d'attelage supérieur. Ce dernier se trouve au sommet de deux montants liés rigidement entre eux à leurs extrémités supérieures et s'étendant vers le haut à partir du cadre auquel ils sont fixés.

Cette structure d'attelage présente ainsi :
- une poutre inférieure constituée par le côté longitudinal antérieur du cadre, laquelle poutre inférieure supporte indirectement un point d'attelage inférieur à chacune de ses extrémités longitudinales,
- deux poutrelles inférieures formées chacune par un côté court du cadre et fixées chacune rigidement à la poutre inférieure dans la zone d'un point d'attelage inférieur respectif et s'étendant vers l'arrière au-dessus de la poutre support correspondante qui y est liée,
   et
- deux montants s'étendant chacun vers le haut à partir de la poutre inférieure à laquelle il est fixé, lesdits montants étant liés rigidement entre eux à leurs extrémités supérieures et supportant le point d'attelage supérieur.

Dans cette herse rotative connue, il est prévu qu'au travail les poutres support supportant les rotors puissent pivoter pour s'adapter aux irrégularités du sol par rotation autour des axes formés par les tourillons.

Pour mettre la machine en position de transport, les poutres support sont pivotées autour des axes des tourillons jusque dans une position verticale.

Cette herse rotative de grande largeur de travail connue est avantageusement réalisée à partir de deux poutres support.

Cependant, comme chaque poutre support est liée à la structure d'attelage au moyen d'une articulation qui est active pendant le travail, il y a un grand risque de voir apparaître des usures au bout d'un certain temps de travail.

De surcroît, étant donné que lesdites articulations s'étendent chacune dans le voisinage de l'extrémité intérieure de la poutre support correspondante, la profondeur de travail des dents peut devenir irrégulière lorsque les poutres support pivotent.

Il apparaît enfin que cette herse rotative connue peut difficilement être combinée avec un semoir.

Dans le prospectus "LELY TERRA SERIE 52" distribué à l'exposition AGRITECHNICA 1989 est décrite une herse rotative comportant :
- une structure d'attelage permettant d'être liée à un véhicule moteur,
- deux poutres support s'étendant transversalement à la direction de travail et au moins sensiblement dans le prolongement l'une de l'autre, chacune de celles-ci étant liée à la structure d'attelage et supportant des rotors dont chacun est muni d'au moins un outil de travail du sol et est guidé en rotation dans ladite poutre support laquelle contient en sus des organes d'entraînement destinés à l'entraînement desdits rotors,
- un carter central fixé sur la structure d'attelage et recevant le mouvement d'une source motrice,
   et
- deux carters latéraux fixés chacun sur une poutre support correspondante dans le but de transmettre aux organes d'entraînement de celle-ci le mouvement reçu du carter central.

Dans cette machine connue, les deux poutres support s'étendent derrière la structure d'attelage à laquelle chaque poutre support est liée au moyen d'une paire de parallélogrammes déformables. Chaque parallélogramme déformable est agencé dans un plan vertical dirigé suivant la direction de travail et s'étend près de l'extrémité longitudinale correspondante de la poutre support respective. Il comporte deux bielles liées chacune de façon articulée d'une part à son extrémité avant à la structure d'attelage et d'autre part à son extrémité arrière sur le dessus de la poutre support correspondante. Au travail, chaque poutre support peut donc se déplacer en hauteur indépendamment du reste de la machine.

Cette herse rotative de grande largeur connue présente également l'avantage d'être réalisée à partir de deux poutres support.

Toutefois, comme les poutres support de cette machine connue s'étendent derrière la structure d'attelage, le centre des masses de ladite machine se situe nettement derrière la structure d'attelage, ce qui se traduit par un délestage accru des roues avant du tracteur lors des manoeuvres en bout de champ notamment.

Un autre inconvénient de cette machine connue réside dans le fait que l'effort de traction exercé par le tracteur sur les poutres support au cours du travail, soit continuellement supporté par les articulations des parallélogrammes déformables. Cet effort de traction important et variable risque donc à plus ou moins long terme de détériorer les surfaces de guidage desdites articulations.

En sus, du fait que les poutres support peuvent se déplacer en hauteur indépendamment l'une de l'autre, il existe indéniablement un jeu latéral entre les deux poutres support. A ce jeu latéral s'ajoutent tous les jeux fonctionnels des diverses articulations nécessaires au bon fonctionnement des parallélogrammes déformables. Il semble donc peu probable que les outils de travail du sol puissent travailler efficacement la totalité de la bande de terre centrale, d'où une structure du sol risquant d'être très hétérogène et mal adaptée au semis.

Dans le document FR-A-2 443 187 est décrite une herse rotative qui comporte tout d'abord une structure d'attelage permettant d'être liée à un véhicule moteur.

Elle comporte ensuite trois poutres support s'étendant orthogonalement à la direction de travail et au moins sensiblement dans le prolongement l'une de l'autre. Chaque poutre support est liée à la structure d'attelage et supporte des rotors dont chacun est muni d'une dent et est guidé en rotation dans la poutre support. Celle-ci contient également des roues dentées destinées à l'entraînement des rotors.

La liaison entre chaque poutre support et la structure d'attelage est réalisée au moyen :
- de deux bras de liaison prévus chacun à une extrémité longitudinale correspondante de ladite poutre support et lié à son extrémité frontale à la poutre antérieure de la structure d'attelage au moyen d'un tourillon orthogonal à la direction de travail,
   et
- d'une structure à ressort s'étendant entre la partie médiane du bord arrière de la poutre support et la poutre postérieure de la structure d'attelage.

Grâce à cette liaison particulière, chaque poutre support peut, pendant le fonctionnement, se déplacer en hauteur par rapport aux autres poutres support par pivotement autour des tourillons correspondants, ce pivotement se faisant à l'encontre de la structure à ressort associée. Pendant ce pivotement, le guidage latéral de la poutre support en question doit être assuré par son (ses) bras de liaison et le (les) bras de liaison de la (des) poutre(s) support adjacente(s), qui sont appliqués l'un contre l'autre.

Certes, cette herse rotative de grande largeur connue présente aussi l'avantage d'être réalisée à partir de poutres support de largeur plus petite.

Cependant, comme la herse rotative précédente, elle présente également l'inconvénient que l'effort de traction exercé par le tracteur sur les poutres support au cours du travail, soit continuellement supporté par les articulations liant les bras de liaison à la poutre antérieure de la structure d'attelage. Il y a là aussi un grand risque de détérioration des surfaces de guidage desdites articulations.

Mais le grand inconvénient de cette herse rotative connue réside surtout dans le fait qu'elle comporte trois poutres support qui peuvent se déplacer en hauteur indépendamment l'une de l'autre par pivotement autour d'un axe orthogonal à la direction de travail. Il y a là un grand risque que la profondeur de travail de la machine ne soit jamais constante sur toute la largeur de travail.

La présente invention a pour objectif de remédier aux inconvénients des herses rotatives de grande largeur de travail de l'art antérieur tout en conservant leur avantage qui réside dans le fait qu'elles soient réalisées à partir de poutres support de largeur plus réduite.

A cet effet, la herse rotative selon la présente invention est caractérisée en ce qu'à chaque extrémité longitudinale de la poutre inférieure, qui s'étend dans la moitié extérieure de la poutre support correspondante, est fixée en sus une aile également dirigée vers l'arrière et reposant, tout comme la poutrelle inférieure correspondante, sur le dessus de la poutre support respective laquelle est liée rigidement à ladite aile et à ladite poutrelle inférieure, et que chaque montant est lié en sus à la poutre inférieure au moyen d'un longeron frontal.

Dans la herse rotative selon l'invention, les deux poutres support sont liées rigidement à la structure d'attelage.

La rigidité de la liaison est remarquable grâce aux caractéristiques particulières de la structure d'attelage.

Dans la herse rotative selon la présente invention, l'effort de traction exercé par le tracteur sur les poutres support est ainsi directement transmis par la structure d'attelage à chaque poutre support.

De plus, cette liaison rigide entre les deux poutres support et la structure d'attelage autorise un positionnement précis et définitif d'une poutre support par rapport à l'autre. Les outils de travail du sol implantés aux extrémités adjacentes des deux poutres support, peuvent ainsi s'étendre les uns près des autres de sorte que la bande de terre centrale puisse être travaillée relativement correctement.

Un autre avantage de la liaison rigide réside dans le fait que les extrémités inférieures des différents outils de travail du sol s'étendent toujours dans le même plan. Il n'apparaît ainsi aucune discontinuité dans la profondeur de travail de la herse rotative.

Ensuite, dans la herse rotative selon l'invention, le centre des masses peut être prévu particulièrement près de l'attelage du tracteur. Ce dernier peut donc aisément porter ladite herse rotative qui, du fait de sa grande largeur de travail, a un poids relativement important, d'autant plus qu'en général elle est combinée avec un semoir en vue de la préparation du lit de semence et de l'ensemencement simultanés.

Finalement, comme la herse rotative de l'invention comporte deux poutres support de largeur plus réduite, il en découle que la fabrication de chaque poutre support est relativement aisée car elle comporte des pièces peu encombrantes donc facilement usinables, transportables et stockables.

Selon une caractéristique supplémentaire de l'invention, il peut également être prévu que la poutre inférieure soit au moins sensiblement parallèle aux deux poutres support et que sa face arrière s'étende au moins sensiblement au niveau du bord frontal desdites poutres support.

Du reste, en vue arrière, la face supérieure de chaque poutre support pourra s'étendre au moins sensiblement au niveau de la partie médiane de la face arrière de la poutre inférieure de la structure d'attelage.

Selon une autre caractéristique supplémentaire de l'invention, chaque aile peut être fixée à la poutre support correspondante près du bord frontal et près du bord arrière de cette dernière.

Selon une autre caractéristique supplémentaire de l'invention, chaque point d'attelage inférieur peut comporter une chape oscillant autour d'un axe au moins sensiblement parallèle aux deux poutres support.

Chaque poutrelle inférieure peut également être fixée à la poutre support correspondante près du bord frontal et près du bord arrière de cette dernière.

Selon une autre caractéristique supplémentaire de l'invention, un montant peut s'étendre dans la zone de chaque point d'attelage inférieur.

Dans une réalisation intéressante, les deux montants peuvent être liés entre eux au moyen d'une poutre supérieure au moins sensiblement parallèle à la poutre inférieure et supportant le point d'attelage supérieur.

Avantageusement, la structure d'attelage peut aussi comporter, dans la zone de chaque extrémité longitudinale de la poutre supérieure, une poutrelle supérieure s'étendant au moins sensiblement horizontalement vers l'arrière à partir de la poutre supérieure à laquelle elle est fixée. Un longeron postérieur pourra en sus lier l'extrémité arrière de la poutrelle supérieure au bord arrière de la poutre support correspondante.

Chaque poutrelle supérieure et le longeron postérieur correspondant pourront s'étendre dans un plan vertical dirigé au moins sensiblement suivant la direction de travail et contenant le point d'attelage inférieur correspondant.

Il peut également être prévu que chaque longeron postérieur comporte deux points d'attelage destinés à recevoir un dispositif d'attelage pour semoir ou directement un semoir.

Dans le but de rigidifier les longerons postérieurs supportant les quatre points d'attelage, la structure d'attelage peut, par ailleurs, comporter une poutre postérieure s'étendant entre les extrémités supérieures des longerons postérieurs, au moins sensiblement parallèlement à la poutre supérieure et fixée à chacune de ses extrémités longitudinales au longeron postérieur correspondant.

Selon une autre caractéristique supplémentaire de l'invention, chaque longeron frontal peut avantageusement s'étendre jusqu'à l'extrémité longitudinale correspondante de la poutre inférieure.

Dans le cas où les deux montants sont liés entre eux au moyen d'une poutre supérieure au moins sensiblement parallèle à la poutre inférieure, il peut également être prévu que le longeron frontal s'étende entre une extrémité longitudinale de ladite poutre supérieure et l'extrémité longitudinale correspondante de la poutre inférieure.

Afin de lier plus rigidement chaque longeron frontal à la poutre inférieure, il peut être prévu, selon une autre caractéristique supplémentaire de l'invention, que dans sa partie centrale, chaque longeron frontal soit lié à la poutre inférieure au moyen d'une traverse.

Avantageusement, chaque traverse peut s'étendre au moins sensiblement verticalement.

Selon une autre caractéristique supplémentaire de l'invention, les poutres support peuvent être liées rigidement à la structure d'attelage au moyen de cornières s'étendant au moins sensiblement parallèlement aux poutres support et dont un certain nombre sera agencé près du bord frontal des poutres support alors que le nombre restant s'étendra près du bord arrière desdites poutres support. Un tel agencement permet de lier de manière particulièrement rigide chaque poutre support à la structure d'attelage.

Dans une réalisation préférée, la structure d'attelage est réalisée, en grande partie, au moyen de tubes à section rectangulaire.

Selon une autre caractéristique supplémentaire de l'invention, la structure d'attelage peut s'étendre au moins sensiblement symétriquement par rapport à un plan vertical médian dirigé suivant la direction de travail et contenant le milieu des extrémités extérieures des poutres support.

Selon une autre caractéristique supplémentaire de l'invention, la structure d'attelage peut comporter un support sur lequel sera agencé le carter central.

L'arbre d'entrée de ce carter central pourra s'étendre au moins sensiblement dans un plan vertical médian dirigé suivant la direction de travail et contenant le milieu des extrémités extérieures des poutres support.

Selon une autre caractéristique supplémentaire de l'invention, le carter central peut entraîner chacun des deux carters latéraux au moyen d'un arbre télescopique à joints universels correspondant s'étendant transversalement à la direction de travail.

En vue de dessus, chaque carter latéral destiné à transmettre aux organes d'entraînement de la poutre support correspondante le mouvement reçu du carter central peut être avantageusement fixé au moins sensiblement au milieu de ladite poutre support correspondante.

Selon une autre caractéristique supplémentaire de l'invention, il peut être prévu que chaque poutre support soit munie d'un rouleau guidé dans les extrémités arrière d'un bras latéral et d'un bras central dont les extrémités avant seront liées à ladite poutre support.

Préférentiellement, la herse rotative selon l'invention comportera, dans ce cas, un bras central unique dans l'extrémité arrière duquel seront guidées les extrémités centrales des deux rouleaux.

D'autres caractéristiques de l'invention apparaissent dans la description suivante d'un exemple de réalisation non limitatif de l'invention faite en référence au dessin annexé sur lequel :
- la figure 1 représente, en vue de dessus, une herse rotative selon l'invention attelée à un tracteur agricole ;
- la figure 2 représente une vue arrière de cette herse rotative (représentée sans rouleaux) suivant la flèche II de la figure 1 ;
- la figure 3 représente, à une échelle agrandie, une vue latérale de ladite herse rotative suivant la flèche III de la figure 2 ;
   et
- la figure 4 représente une vue latérale de ladite herse rotative munie d'un dispositif d'attelage pour semoir.

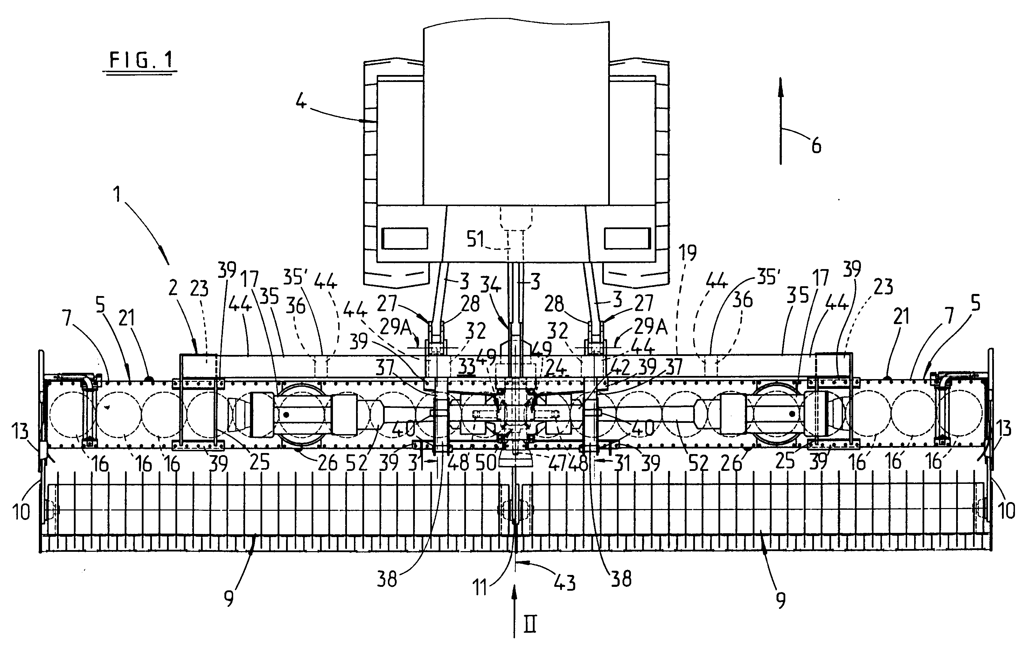

Sur les figures 1 à 4 apparaît une herse rotative (1) selon l'invention.

Celle-ci comporte une structure d'attelage (2) destinée à être liée à l'attelage trois points (3) d'un tracteur agricole (4) et deux poutres support (5) liées rigidement à ladite structure d'attelage (2). Ces deux poutres support (5) s'étendent transversalement à la direction de travail (6), au moins sensiblement dans le prolongement l'une de l'autre et à la suite l'une de l'autre.

Chaque poutre support (5) comporte essentiellement un caisson (7) sous lequel sont agencés des outils de travail du sol (8). Juste derrière le caisson (7) s'étend un rouleau (9). Ce rouleau (9), du type "Packer" dans l'exemple représenté, est guidé dans les extrémités arrière de deux bras (10, 11) : un bras latéral (10) propre à chaque rouleau (9) et un bras central (11) commun aux deux rouleaux (9). A leur extrémité avant le bras latéral (10) et le bras central (11) sont liés au caisson (7) au moyen d'une articulation (12) d'axe parallèle aux poutres support (5). Entre chacun de ces bras (10, 11) et le caisson (7) est par ailleurs prévu un dispositif de réglage (13). Celui-ci est connu de l'homme de l'art et permet de limiter le déplacement en hauteur du rouleau (9) par rapport au caisson (7). Au travail, le rouleau (9) roule sur le sol. De cette sorte, il détermine la profondeur de travail des outils de travail du sol (8).

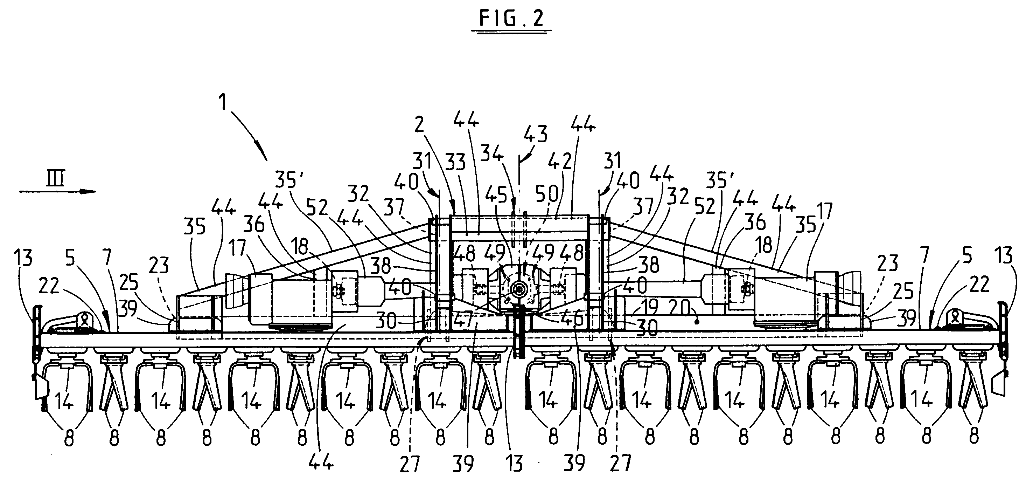

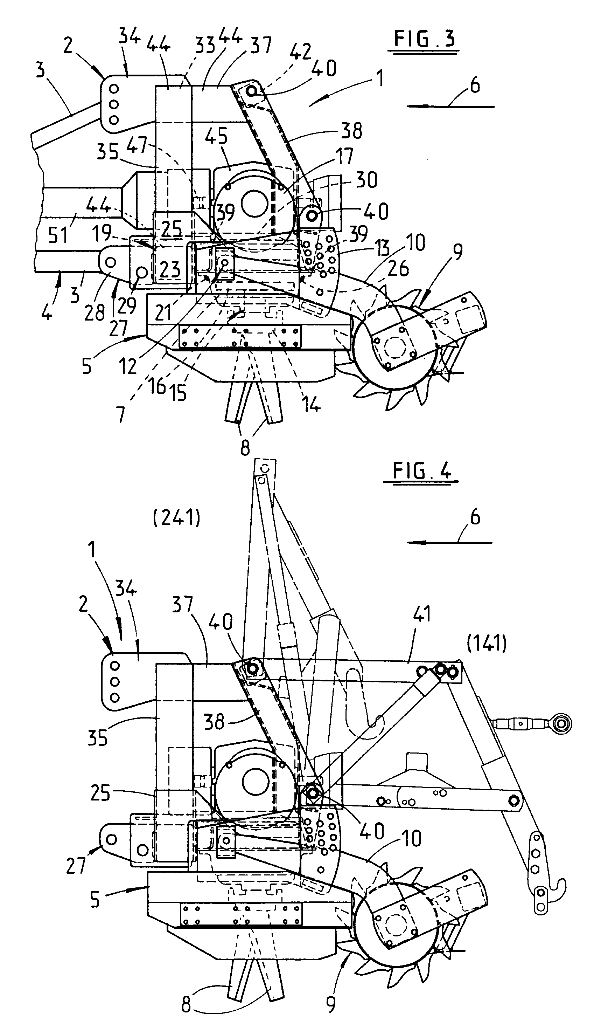

Comme représenté sur les figures 2 à 4, les outils de travail du sol (8) sont liés à des rotors (14). Chaque rotor (14) traverse au moins sensiblement verticalement le fond du caisson (7) et est muni, à sa partie inférieure, d'au moins un desdits outils de travail du sol (8) qui s'étend vers le bas. Dans sa partie médiane, ledit rotor (14) est lié au caisson (7) à l'aide d'une articulation cylindrique (15) d'axe dirigé au moins sensiblement verticalement. A chaque rotor (14) est également fixée une roue dentée (16) agencée à l'intérieur du caisson (7) (figures 1 et 3). Sur la figure 1, on voit en particulier que les roues dentées (16) de chaque caisson (7) sont alignées et s'engrènent deux à deux.

Au dessus de chaque caisson (7), est en sus agencé un carter latéral (17). Celui-ci se situe au moins sensiblement dans la partie centrale du caisson (7) et est réalisé sous forme de boîte de vitesse. Le carter latéral (17) reçoit le mouvement de rotation au moyen d'un arbre d'entrée (18) dirigé transversalement à la direction de travail (6) et orienté vers la poutre support (5) adjacente. Le mouvement de rotation est ensuite communiqué par l'intermédiaire du carter latéral (17) à l'une des roues dentées (16) du caisson (7) qui le transmet aux rotors (14) auxquels sont fixés les outils de travail du sol (8).

Avantageusement, cette herse rotative (1) est réalisée au moyen de plusieurs poutres support (5). Grâce à ce principe, les poutres support (5) peuvent être commercialisées soit individuellement, soit de façon juxtaposée, ce qui a pour effet d'obtenir un coût de production relativement bas.

De plus, du fait de sa constitution modulaire, la fabrication de chaque poutre support (5) de cette herse rotative (1) selon l'invention, ne requiert que des pièces peu encombrantes donc aisément usinables, transportables et stockables.

La liaison rigide entre les poutres support (5) et la structure d'attelage (2) autorise du reste un positionnement précis et définitif d'une poutre support (5) par rapport à l'autre, c'est-à-dire qu'il est aisément possible de positionner les outils de travail du sol (8) d'une poutre support (5) par rapport aux outils de travail du sol (8) de l'autre poutre support (5) de sorte que la bande de terre centrale soit correctement travaillée.

La structure d'attelage (2), quant à elle, comporte notamment une poutre inférieure (19). Celle-ci s'étend au moins sensiblement parallèlement aux deux poutres support (5) et est agencée dans le proche voisinage desdites poutres support (5). En effet, il apparaît sur les figures que la face arrière (20) de cette poutre inférieure (19) s'étend au moins sensiblement au voisinage du bord frontal (21) des deux poutres support (5). De plus, la face supérieure (22) de chaque poutre support (5) s'étend, en vue arrière, au moins sensiblement au niveau de la partie médiane de la poutre inférieure (19).

La poutre inférieure (19) est par ailleurs fixée aux deux poutres support (5) au niveau de chacune de ses extrémités longitudinales (23) ainsi qu'au niveau de sa partie centrale (24). A cet effet, la poutre inférieure (19) comporte, à chacune de ses extrémités longitudinales (23), une aile (25) dirigée vers l'arrière. Chaque aile (25) repose sur le dessus de la poutre support (5) correspondante à laquelle elle est fixée près du bord frontal (21) et près du bord arrière (26) de ladite poutre support (5). Chaque aile (25) ou chaque extrémité longitudinale (23) de la poutre inférieure (19) s'étend du reste dans la moitié extérieure de la poutre support (5) correspondante.

A l'avant de la partie centrale (24) de la poutre inférieure (19) sont agencés les deux points d'attelage inférieurs (27). Chacun de ces points d'attelage inférieurs (27) comporte une chape (28) qui est liée à la poutre inférieure (19) au moyen d'une articulation cylindrique (29) d'axe géométrique (29A) au moins sensiblement parallèle aux deux poutres support (5).

Afin de lier rigidement la poutre inférieure (19) au niveau de sa partie centrale (24) aux deux poutres support (5), il est prévu que la structure d'attelage (2) comporte deux poutrelles inférieures (30). Dans la zone de chaque point d'attelage inférieur (27), chaque poutrelle inférieure (30) s'étend vers l'arrière à partir de la poutre inférieure (19) à laquelle elle est fixée. De plus, chaque poutrelle inférieure (30) repose sur le dessus de la poutre support (5) correspondante à laquelle elle est fixée près du bord frontal (21) et près du bord arrière (26) de ladite poutre support (5). Avantageusement, chaque poutrelle inférieure (30) s'étend au moins sensiblement dans un plan vertical (31) dirigé suivant la direction de travail (6) et contenant le point d'attelage inférieur (27) correspondant.

Dans la zone de chaque point d'attelage inférieur (27), la structure d'attelage (2) comporte également un montant (32) qui s'étend vers le haut à partir de la poutre inférieure (19) à laquelle il est fixé. A leur extrémité supérieure, les montants (32) sont liés rigidement entre eux au moyen d'une poutre supérieure (33). Cette dernière s'étend au moins sensiblement parallèlement à la poutre inférieure (19) et supporte le point d'attelage supérieur (34).

De part et d'autre des deux montants (32), la structure d'attelage (2) comporte en sus deux longerons frontaux (35). Chaque longeron frontal (35) s'étend entre une extrémité longitudinale de la poutre supérieure (33) et l'extrémité longitudinale (23) correspondante de la poutre inférieure (19).

Dans cet exemple de réalisation selon l'invention, la partie centrale (35′) de chaque longeron frontal (35) est du reste liée à la poutre inférieure (19) au moyen d'une traverse (36) dirigée au moins sensiblement verticalement.

Dans la zone de chaque extrémité longitudinale de la poutre supérieure (33), la structure d'attelage (2) comporte par ailleurs une poutrelle supérieure (37). Celle-ci s'étend au moins sensiblement horizontalement vers l'arrière à partir de la poutre supérieure (33) à laquelle elle est fixée. A l'extrémité arrière de chaque poutrelle supérieure (37) est fixé un longeron postérieur (38) qui s'étend vers l'arrière et vers le bas jusqu'au bord arrière (26) de la poutre support (5) correspondante. Avantageusement, chaque poutrelle supérieure (37) et le longeron postérieur (38) correspondant s'étendent, comme la poutrelle inférieure (30), au moins sensiblement dans le plan vertical (31) dirigé suivant la direction de travail (6) et contenant le point d'attelage inférieur (27) correspondant. De ce fait, chaque longeron postérieur (38) peut être fixé à la poutrelle inférieure (30) respective près du bord arrière (26) de la poutre support (5) correspondante.

Dans cet exemple de réalisation d'une herse rotative (1) selon l'invention la structure d'attelage (2) est liée aux poutres support (5) au moyen de cornières (39). Celles-ci s'étendent au moins sensiblement parallèlement aux poutres support (5) ; un certain nombre d'entre elles est agencé près du bord frontal (21) des poutres support (5) alors que le nombre restant s'étend près du bord arrière (26) desdites poutres support (5). Grâce à cet agencement, chaque poutre support (5) est liée de manière particulièrement rigide à la structure d'attelage (2).

De plus, comme la structure d'attelage (2) s'étend selon l'invention, directement au-dessus ou dans le proche voisinage de la partie frontale (21) des poutres support (5), le centre des masses de cette herse rotative (1) est particulièrement proche des roues arrière dudit tracteur (4). De ce fait, le poids souvent très important de ce type de machine peut aisément être supporté par le tracteur (4).

Sur les figures 1 à 4, il apparaît aussi que chaque longeron postérieur (38) comporte deux points d'attelage (40). Ces quatres points d'attelage (40) sont destinés à recevoir un dispositif d'attelage (41) pour semoir. Un tel dispositif d'attelage (41), connu de l'homme de l'art, est représenté sur la figure 4 dans deux positions différentes (141, 241) : une position de transport (241) et une position de travail (141). Dans la position de travail (141) le semoir (non représenté) se trouverait derrière les rouleaux (9) de la herse rotative (1), tandis que dans la position de transport (241), le semoir se trouverait au-dessus du rouleau (9). Dans les deux cas, la herse rotative (1) selon l'invention dont le centre des masses est particulièrement proche du tracteur (4), peut aisément supporter ce type de montage.

Afin de rigidifier les longerons postérieurs (38) qui supportent les quatres points d'attelage (40), il est aussi prévu qu'entre les extrémités supérieures des longerons postérieurs (38), la structure d'attelage (2) comporte une poutre postérieure (42). Celle-ci s'étend au moins sensiblement parallèlement à la poutre supérieure (33) et est fixée à chacune de ces extrémités longitudinales au longeron postérieur (38) correspondant.

Globalement, il apparaît sur les figures 1 et 2 que la structure d'attelage (2), ci-dessus décrite, s'étend au moins sensiblement symétriquement par rapport à un plan vertical médian (43) dirigé suivant la direction de travail (6) et contenant le point d'attelage supérieur (34). De plus, la structure d'attelage (2) est réalisée en partie au moins à l'aide de tubes (44) à section rectangulaire.

On peut aussi voir sur les figures 1 et 2 de cet exemple de réalisation selon l'invention, que les deux poutres support (5) sont quasiment identiques et qu'elles s'étendent au moins sensiblement symétriquement par rapport au plan vertical médian (43) défini ci-dessus. De ce fait, le bras central (11) qui est commun aux deux rouleaux (9), s'étend au moins sensiblement dans le plan vertical médian (43).

Dans le plan vertical médian (43) est également agencé un carter central (45). Celui-ci est rapporté de manière amovible à la structure d'attelage (2) au moyen d'un support (46) sur lequel il repose. Le carter central (45) comporte un arbre d'entrée (47) dirigé suivant la direction de travail (6) et traversant le carter central (45) de part en part afin de permettre l'entraînement d'un éventuel semoir.

De part et d'autre du carter central (45) débouche un arbre de sortie (48) respectif dirigé transversalement à la direction de travail (6). Chacun de ces arbres de sortie (48) est solidaire d'un pignon conique (49) correspondant engrènant avec un autre pignon conique (50) solidaire de l'arbre d'entrée (47).

L'entraînement des outils de travail du sol (8) s'effectue à partir de la prise de force (non représentée) du tracteur agricole (4) qui entraîne, par l'intermédiaire d'un arbre télescopique à joints universels (51), l'arbre d'entrée (47) du carter central (45). A l'intérieur du carter central (45), l'arbre d'entrée (47) transmet le mouvement de rotation à chaque arbre de sortie (48) au moyen de la paire de pignons coniques (49, 50) correspondante. Afin de transmettre le mouvement du carter central (45) à chaque carter latéral (17) un arbre télescopique à joints universels (52) respectif s'étendant entre le montant (32) et le longeron postérieur (38), lie en rotation chaque arbre de sortie latéral (48) du carter central (45) avec l'arbre d'entrée (18) du carter latéral (17) correspondant. Ensuite, le mouvement de rotation est, comme dit précédemment, communiqué à l'une des roues dentées (16) du caisson (7) correspondant qui le transmet aux rotors (14) auxquels sont fixés les outils de travail du sol (8).

Finalement, différentes modifications restent possibles, notamment en ce qui concerne la constitution des divers éléments ou par substitution d'équivalents techniques, sans pour autant sortir du domaine de protection défini dans les revendications.

## Revendications

1. Herse rotative (1) comportant :
- une structure d'attelage (2) permettant d'être liée à un véhicule moteur (4),
- deux poutres support (5) s'étendant transversalement à la direction de travail (6) et au moins sensiblement dans le prolongement l'une de l'autre, chacune de celles-ci étant liée à la structure d'attelage (2) et supportant des rotors (14) dont chacun est muni d'au moins un outil de travail du sol (8) et est guidé en rotation dans ladite poutre support (5) laquelle contient en sus des organes d'entraînement (16) destinés à l'entraînement desdits rotors (14),
- un carter central (45) fixé sur la structure d'attelage (2) et recevant le mouvement d'une source motrice (4)
et
- deux carters latéraux (17) fixés chacun sur une poutre support (5) correspondante dans le but de transmettre aux organes d'entraînement (16) de celle-ci le mouvement reçu du carter central (45),
ladite structure d'attelage (2) qui s'étend en partie au moins au-dessus des poutres support (5), comportant :
- une poutre inférieure (19) supportant directement ou indirectement deux points d'attelage inférieurs (27),
- deux poutrelles inférieures (30) fixées chacune rigidement à la poutre inférieure (19) dans la zone d'un point d'attelage inférieur (27) respectif et s'étendant vers l'arrière au-dessus de la poutre support (5) correspondante qui y est liée
et
- deux montants (32) s'étendant vers le haut à partir de la poutre inférieure (19) à laquelle ils sont fixés, lesdits montants (32) étant liés rigidement entre eux à leurs extrémités supérieures et supportant un point d'attelage supérieur (34),
caractérisée en ce qu'à chaque extrémité longitudinale (23) de la poutre inférieure (19), qui s'étend dans la moitié extérieure de la poutre support (5) correspondante, est fixée en sus une aile (25) également dirigée vers l'arrière et reposant, tout comme la poutrelle inférieure (30) correspondante, sur le dessus de la poutre support (5) respective laquelle est liée rigidement à ladite aile (25) et à ladite poutrelle inférieure (30), et que chaque montant (32) est lié en sus à la poutre inférieure (19) au moyen d'un longeron frontal (35).

2. Herse rotative selon la revendication 1, caractérisée en ce que la poutre inférieure (19) est au moins sensiblement parallèle aux deux poutres support (5) et sa face arrière (20) s'étend au moins sensiblement au niveau du bord frontal (21) desdites poutres support (5).

3. Herse rotative selon la revendication 2, caractérisée en ce que la face supérieure (22) de chaque poutre support (5) s'étend, en vue arrière, au moins sensiblement au niveau de la partie médiane de la face arrière (20) de la poutre inférieure (19) de la structure d'attelage (2).

4. Herse rotative selon une ou plusieurs des revendications 1 à 3, caractérisée en ce que chaque aile (25) est fixée à la poutre support (5) correspondante près du bord frontal (21) et près du bord arrière (26) de cette dernière.

5. Herse rotative selon une ou plusieurs des revendications 1 à 4, caractérisée en ce que chaque point d'attelage inférieur (27) comporte une chape (28) oscillant autour d'un axe (29A) au moins sensiblement parallèle aux deux poutres support (5).

6. Herse rotative selon une ou plusieurs des revendications 1 à 5, caractérisée en ce que chaque poutrelle inférieure (30) est fixée à la poutre support (5) correspondante près du bord frontal (21) et près du bord arrière (26) de cette dernière.

7. Herse rotative selon une ou plusieurs des revendications 1 à 6, caractérisée en ce qu'un montant (32) s'étend dans la zone de chaque point d'attelage inférieur (27).

8. Herse rotative selon une ou plusieurs des revendications 1 à 7, caractérisée en ce que les deux montants (32) sont liés entre eux au moyen d'une poutre supérieure (33) au moins sensiblement parallèle à la poutre inférieure (19) et supportant le point d'attelage supérieur (34).

9. Herse rotative selon la revendication 8, caractérisée en ce que dans la zone de chaque extrémité longitudinale de la poutre supérieure (33) la structure d'attelage (2) comporte une poutrelle supérieure (37) s'étendant au moins sensiblement horizontalement vers l'arrière à partir de la poutre supérieure (33) à laquelle elle est fixée, et qu'un longeron postérieur (38) lie en sus l'extrémité arrière de la poutrelle supérieure (37) au bord arrière (26) de la poutre support (5) correspondante.

10. Herse rotative selon la revendication 9, caractérisée en ce qu'en vue de dessus, chaque poutrelle supérieure (37) et le longeron postérieur (38) correspondant s'étendent dans un plan vertical (31) dirigé au moins sensiblement suivant la direction de travail (6) et contenant le point d'attelage inférieur (27) correspondant.

11. Herse rotative selon la revendication 9 ou 10, caractérisée en ce que chaque longeron postérieur (38) comporte deux points d'attelage (40) destinés à recevoir un dispositif d'attelage (41) pour semoir.

12. Herse rotative selon une ou plusieurs des revendications 9 à 11, caractérisée en ce qu'entre les extrémités supérieures des longerons postérieurs (38), la structure d'attelage (2) comporte par ailleurs une poutre postérieure (42) s'étendant au moins sensiblement parallèlement à la poutre supérieure (33) et fixée à chacune de ses extrémités longitudinales au longeron postérieur (38) correspondant.

13. Herse rotative selon une ou plusieurs des revendications 1 à 12, caractérisée en ce que chaque longeron frontal (35) s'étend jusqu'à l'extrémité longitudinale (23) correspondante de la poutre inférieure (19).

14. Herse rotative selon la revendication 13 et une ou plusieurs des revendications 8 à 12, caractérisée en ce que le longeron frontal (35) s'étend entre une extrémité longitudinale de la poutre supérieure (33) et l'extrémité longitudinale (23) correspondante de la poutre inférieure (19).

15. Herse rotative selon une ou plusieurs des revendications 1 à 14, caractérisée en ce que, dans sa partie centrale (35'), chaque longeron frontal (35) est lié à la poutre inférieure (19) au moyen d'une traverse (36).

16. Herse rotative selon la revendication 15, caractérisée en ce que chaque traverse (36) s'étend au moins sensiblement verticalement.

17. Herse rotative selon une ou plusieurs des revendications 1 à 16, caractérisée en ce que les poutres support (5) sont liées rigidement à la structure d'attelage (2) au moyen de cornières (39) s'étendant au moins sensiblement parallèlement aux poutres support (5) et dont un certain nombre est agencé près du bord frontal (21) des poutres support (5) alors que le nombre restant s'étend près du bord arrière (26) desdites poutres support (5).

18. Herse rotative selon une ou plusieurs des revendications 1 à 17, caractérisée en ce que la structure d'attelage (2) est réalisée, en grande partie, au moyen de tubes (44) à section rectangulaire.

19. Herse rotative selon une ou plusieurs des revendications 1 à 18, caractérisée en ce que la structure d'attelage (2) s'étend au moins sensiblement symétriquement par rapport à un plan vertical médian (43) dirigé suivant la direction de travail (6) et contenant le milieu des extrémités extérieures des poutres support (5).

20. Herse rotative selon une ou plusieurs des revendications 1 à 19, caractérisée en ce que la structure d'attelage (2) comporte un support (46) sur lequel est agencé le carter central (45).

21. Herse rotative selon une ou plusieurs des revendications 1 à 20, caractérisée en ce que l'arbre d'entrée (47) du carter central (45) s'étend au moins sensiblement dans un plan vertical médian (43) dirigé suivant la direction de travail (6) et contenant le milieu des extrémités extérieures des poutres support (5).

22. Herse rotative selon une ou plusieurs des revendications 1 à 21, caractérisée en ce que le carter central (45) entraîne chacun des deux carters latéraux (17) au moyen d'un arbre télescopique à joints universels (52) correspondant s'étendant transversalement à la direction de travail (6).

23. Herse rotative selon une ou plusieurs des revendications 1 à 22, caractérisée en ce qu'en vue de dessus chaque carter latéral (17) est fixé au moins sensiblement au milieu de la poutre support (5) correspondante.

24. Herse rotative selon une ou plusieurs des revendications 1 à 23, caractérisée en ce que les deux poutres support (5) ont au moins sensiblement la même longueur et au moins sensiblement le même nombre de rotors (14).

25. Herse rotative selon une ou plusieurs des revendications 1 à 24, caractérisée en ce que chaque poutre support (5) est munie d'un rouleau (9) guidé dans les extrémités arrière d'un bras latéral (10) et d'un bras central (11) dont les extrémités avant sont liées à ladite poutre support (5).

26. Herse rotative selon la revendication 25, caractérisée en ce qu'elle comporte un bras central (11) unique dans l'extrémité arrière duquel sont guidées les extrémités centrales des deux rouleaux (9).

## Claims

1. A rotary harrow (1) comprising:
- a hitching structure (2) permitting connection to a motor vehicle (4),
- two support beams (5) extending transversely to the direction of work (6) and at least approximately in the prolongation of one another, each of these being connected to the hitching structure (2) and supporting rotors (14) each of which is equipped with at least one tool for working the soil (8) and is guided in rotation in the said support beam (5) which contains in addition drive elements (16) intended to drive the said rotors (14),
- a central housing (45) fixed onto the hitching structure (2) and receiving the movement from a motor source (4)
and
- two side housings (17) each fixed onto a corresponding support beam (5) with the aim of transmitting to the drive elements (16) of this latter the movement received from the central housing (45),
the said hitching structure (2) which extends in part at least above the support beams (5), comprising:
- a lower beam (19) supporting directly or indirectly two lower hitching points (27),
- two lower girders (30) each fixed rigidly to the lower beam (19) in the zone of a respective lower hitching point (27) and extending towards the rear above the corresponding support beam (5) which is connected there
and
- two uprights (32) extending upwardly from the lower beam (19) to which the are fixed, the said uprights (32) being rigidly connected together at their upper ends and supporting an upper hitching point (34),
***characterised in that*** at each longitudinal end (23) of the lower beam (19), which extends in the outer half of the corresponding support beam (5), is fixed in addition a wing (25) also directed towards the rear and resting, as in the case of the corresponding lower girder (30), on the top of the respective support beam (5) which is connected rigidly to the said wing (25) and to the said lower girder (30), and in that each upright (32) is connected in addition to the lower beam (19) by means of a front girder (35).

2. A rotary harrow in accordance with claim 1, ***characterised in that*** the lower beam (19) is at least approximately parallel to the two support beams (5) and its rear face (20) extends at least approximately at the level of the front edge (21) of the said support beams (5).

3. A rotary harrow in accordance with claim 2, ***characterised in that*** the upper face (22) of each support beam (5) extends, when seen from behind, at least approximately at the level of the middle part of the rear face (20) of the lower beam (19) of the hitching structure (2).

4. A rotary harrow in accordance with one or more of claims 1 to 3, ***characterised in that*** each wing (25) is fixed to the corresponding support beam (5) close to the front edge (21) and close to the rear edge (26) of this latter.

5. A rotary harrow in accordance with one or more of claims 1 to 4, ***characterised in that*** each lower hitching point (27) has a yoke (28) swinging about an axis (29A) at least approximately parallel to the two support beams (5).

6. A rotary harrow in accordance with one or more of claims 1 to 5, ***characterised in that*** each lower girder (30) is fixed to the corresponding support beam (5) close to the front edge (21) and close to the rear edge (26) of this latter.

7. A rotary harrow in accordance with one or more of claims 1 to 6, ***characterised in that*** an upright (32) extends in the zone of each lower hitching point (27).

8. A rotary harrow in accordance with one or more of claims 1 to 7, ***characterised in that*** the two uprights (32) are connected together by means of an upper beam (33) at least approximately parallel to the lower beam (19) and supporting the upper hitching point (34).

9. A rotary harrow in accordance with claim 8, ***characterised in that*** in the zone of each longitudinal end of the upper beam (33) the hitching structure (2) has an upper girder (37) extending at least approximately horizontally towards the rear from the upper beam (33) to which it is fixed, and in that a rear girder (38) additionally connects the rear end of the upper girder (37) to the rear edge (26) of the corresponding support beam (5).

10. A rotary harrow in accordance with claim 9, ***characterised in that*** when seen from above, each upper girder (37) and the corresponding rear girder (38) extend in a vertical plane (31) directed at least approximately along the direction of work (6) and containing the corresponding lower hitching point (27).

11. A rotary harrow in accordance with claim 9 or 10, ***characterised in that*** each rear girder (38) has two hitching points (40) intended to receive a hitching device (41) for a sowing machine.

12. A rotary harrow in accordance with one or more of claims 9 to 11, ***characterised in that*** between the upper ends of the rear girders (38), the hitching structure (2) has moreover a rear beam (42) extending at least approximately parallel to the upper beam (33) and fixed at each of its longitudinal ends to the corresponding rear girder (38).

13. A rotary harrow in accordance with one or more of claims 1 to 12, ***characterised in that*** each front girder (35) extends up to the corresponding longitudinal end (23) of the lower beam (19).

14. A rotary harrow in accordance with claim 13 and one or more of claims 8 to 12, ***characterised in that*** the front girder (35) extends between a longitudinal end of the upper beam (33) and the corresponding longitudinal end (23) of the lower beam (19).

15. A rotary harrow in accordance with one or more of claims 1 to 14, ***characterised in that***, in its central part (35'), each front girder (35) is connected to the lower beam (19) by means of a crosspiece (36).

16. A rotary harrow in accordance with claim 15, ***characterised in that*** each crosspiece (36) extends at least approximately vertically.

17. A rotary harrow in accordance with one or more of claims 1 to 16, ***characterised in that*** the support beams (5) are connected rigidly to the hitching structure (2) by means of angle brackets (39) extending at least approximately parallel to the support beams (5) and of which a certain number are arranged close to the front edge (21) of the support beams (5) while the remaining number extend close to the rear edge (26) of the said support beams (5).

18. A rotary harrow in accordance with one or more of claims 1 to 17, ***characterised in that*** the hitching structure (2) is made up, to a large extent, from tubes (44) with a rectangular cross section.

19. A rotary harrow in accordance with one or more of claims 1 to 18, ***characterised in that*** the hitching structure (2) extends at least approximately symmetrically in relation to a median vertical plane (43) directed along the direction of work (6) and extending in the middle of the outer ends of the support beams (5).

20. A rotary harrow in accordance with one or more of claims 1 to 19, ***characterised in that*** the hitching structure (2) has a support (46) on which is arranged the central housing (45).

21. A rotary harrow in accordance with one or more of claims 1 to 20, ***characterised in that*** the input shaft (47) of the central housing (45) extends at least approximately in a median vertical plane (43) directed along the direction of work (5) and extending in the middle of the outer ends of the support beams (5).

22. A rotary harrow in accordance with one or more of claims 1 to 21, ***characterised in that*** the central housing (45) drives each of the two side housings (17) by means of a corresponding telescopic shaft with universal joints (52) extending transversely to the direction of work (6).

23. A rotary harrow in accordance with one or more of claims 1 to 22, ***characterised in that*** when seen from above each side housing (17) is fixed at least approximately to the middle of the corresponding support beam (5).

24. A rotary harrow in accordance with one or more of claims 1 to 23, ***characterised in that*** the two support beams (5) have at least approximately the same length and at least approximately the same number of rotors (14).

25. A rotary harrow in accordance with one or more of claims 1 to 24, ***characterised in that*** each support beam (5) is equipped with a roller (9) guided in the rear ends of a side arm (10) and of a central arm (11) the front ends of which are connected to the said support beam (5).

26. A rotary harrow in accordance with claim 25, ***characterised in that*** it has a single central arm (11) in the rear end of which are guided the central ends of the two rollers (9).

## Patentansprüche

1. Kreiselegge (1), umfassend:
- ein Anbaugestell (2), das mit einem Motorfahrzeug (4) verbindbar ist,
- zwei sich quer zur Arbeitsrichtung (6) und zumindest im wesentlichen in ihrer gegenseitigen Verlängerung erstreckende Tragbalken (5), von denen jeder mit dem Anbaugestell (2) verbunden ist und Rotoren (14) trägt, die jeweils mit zumindest einem Bodenbearbeitungswerkzeug (8) versehen und rotierend in dem Tragbalken (5) geführt sind, welcher ferner Antriebsorgane (16) enthält, die für den Antrieb der Rotoren (14) bestimmt sind,
- ein zentrales Gehäuse (45), das auf dem Anbaugestell (2) befestigt ist und die Bewegung einer Antriebsquelle (4) empfängt,
und
- zwei seitliche Gehäuse (17), die jeweils auf einem entsprechenden Tragbalken (5) befestigt sind, um auf deren Antriebsorgane (16) die vom zentralen Gehäuse (45) empfangene Bewegung zu übertragen,
wobei das Anbaugestell (2), das sich zumindest teilweise oberhalb der Tragbalken (5) erstreckt,
- einen unteren Träger (19), der direkt oder indirekt zwei untere Kupplungspunkte (27) trägt,
- zwei untere Tragstangen (30), die jeweils starr an dem unteren Träger (19) im Bereich eines entsprechenden unteren Kupplungspunktes (27) befestigt sind und sich nach hinten oberhalb des entsprechenden Tragbalkens (5) erstrecken, der damit verbunden ist,
und
- zwei Stützen (32), die sich vom unteren Träger (19), an dem sie befestigt sind, nach oben erstrecken, welche Stützen (32) starr miteinander an ihren oberen Enden verbunden sind und einen oberen Kupplungspunkt (34) tragen,
umfaßt,
***dadurch gekennzeichnet**,* daß an jedem Längsende (23) des unteren Trägers (19), das sich in der äußeren Hälfte des entsprechenden Tragbalkens (5) befindet, überdies ein Flügel (25) befestigt ist, der ebenfalls nach hinten gerichtet ist, und ebenso wie die entsprechende untere Tragstange (30) auf der Oberseite des betreffenden Tragbalkens (5) aufruht, der starr mit dem Flügel (25) und der unteren Tragstange (30) verbunden ist, und daß jede Stütze (32) ferner mit dem unteren Träger (19) mittels einer vorderen Strebe (35) verbunden ist.

2. Kreiselegge nach Anspruch 1, ***dadurch gekennzeichnet**,* daß der untere Träger (19) zumindest im wesentlichen parallel zu den zwei Tragbalken (5) ist und daß sich seine Rückseite (20) zumindest im wesentlichen im Bereich des vorderen Randes (21) der Tragbalken (5) erstreckt.

3. Kreiselegge nach Anspruch 2, ***dadurch gekennzeichnet**,* daß sich die Oberseite (22) jedes Tragbalkens (5), von hinten gesehen, zumindest im wesentlichen in der Höhe des Mittelteils der Rückseite (20) des unteren Trägers (19) des Anbaugestells (2) erstreckt.

4. Kreiselegge nach einem oder mehreren der Ansprüche 1 bis 3, ***dadurch gekennzeichnet**,* daß jeder Flügel (25) am entsprechenden Tragbalken (5) nahe dem vorderen Rand (21) und nahe dem hinteren Rand (26) des letzteren befestigt ist.

5. Kreiselegge nach einem oder mehreren der Ansprüche 1 bis 4, ***dadurch gekennzeichnet**,* daß jeder untere Kupplungspunkt (27) eine um eine zu den zwei Tragbalken (5) zumindest im wesentlichen parallele Achse (29A) oszillierende Gelenkgabel (28) umfaßt.

6. Kreiselegge nach einem oder mehreren der Ansprüche 1 bis 5, ***dadurch gekennzeichnet**,* daß jede untere Tragstange (30) am entsprechenden Tragbalken (5) nahe dem vorderen Rand (21) und nahe dem hinteren Rand (26) des letzteren befestigt ist.

7. Kreiselegge nach einem oder mehreren der Ansprüche 1 bis 6, ***dadurch gekennzeichnet**,* daß sich eine Stütze (32) im Bereich jedes unteren Kupplungspunktes (27) befindet.

8. Kreiselegge nach einem oder mehreren der Ansprüche 1 bis 7, ***dadurch gekennzeichnet**,* daß die beiden Stützen (32) miteinander mittels eines oberen Trägers (33) verbunden sind, der sich zumindest im wesentlichen parallel zum unteren Träger (19) erstreckt und den oberen Kupplungspunkt (34) trägt.

9. Kreiselegge nach Anspruch 8, ***dadurch gekennzeichnet**,* daß das Anbaugestell (2) im Bereich jedes Längsendes des oberen Trägers (33) eine obere Tragstange (37) umfaßt, die sich vom oberen Träger (33), an dem sie befestigt ist, zumindest im wesentlichen horizontal nach hinten erstreckt, und daß eine hintere Strebe (38) das hintere Ende der oberen Tragstange (37) mit dem hinteren Rand (26) des entsprechenden Tragbalkens (5) zusätzlich befestigt.

10. Kreiselegge nach Anspruch 9, ***dadurch gekennzeichnet**,* daß sich, in Draufsicht, jede obere Tragstange (37) und die entsprechende hintere Strebe (38) in einer Vertikalebene (31) befinden, die zumindest im wesentlichen in Arbeitsrichtung (6) ausgerichtet ist und den entsprechenden unteren Kupplungspunkt (27) enthält.

11. Kreiselegge nach Anspruch 9 oder 10, ***dadurch gekennzeichnet**,* daß jede hintere Strebe (38) zwei Kupplungspunkte (40) umfaßt, die zur Aufnahme eines Anbaugestells (41) für eine Sämaschine bestimmt sind.

12. Kreiselegge nach einem oder mehreren der Ansprüche 9 bis 11, ***dadurch gekennzeichnet**,* daß das Anbaugestell (2) zwischen den oberen Enden der hinteren Streben (38) außerdem einen hinteren Träger (42) aufweist, der zumindest im wesentlichen parallel zum oberen Träger (33) verläuft und an jedem seiner Längsenden mit der entsprechenden hinteren Strebe (38) verbunden ist.

13. Kreiselegge nach einem oder mehreren der Ansprüche 1 bis 12, ***dadurch gekennzeichnet**,* daß sich jede vordere Strebe (35) bis zum entsprechenden Längsende (23) des unteren Trägers (19) erstreckt.

14. Kreiselegge nach Anspruch 13 und einem oder mehreren der Ansprüche 8 bis 12, ***dadurch gekennzeichnet**,* daß sich die vordere Strebe (35) zwischen einem Längsende des oberen Trägers (33) und dem entsprechenden Längsende (23) des unteren Trägers (19) erstreckt.

15. Kreiselegge nach einem oder mehreren der Ansprüche 1 bis 14, ***dadurch gekennzeichnet**,* daß jede vordere Strebe (35) in ihrem Mittelteil (35') mit dem unteren Träger (19) mittels eines Steges (36) verbunden ist.

16. Kreiselegge nach Anspruch 15, ***dadurch gekennzeichnet**,* daß sich jeder Steg (36) zumindest im wesentlichen vertikal erstreckt.

17. Kreiselegge nach einem oder mehreren der Ansprüche 1 bis 16, ***dadurch gekennzeichnet**,* daß die Tragbalken (5) mit dem Anbaugestell (2) mit Hilfe von Winkelprofilen (39) starr verbunden sind, die zumindest im wesentlichen parallel zu den Tragbalken (5) verlaufen, und von denen eine gewisse Anzahl nahe dem vorderen Rand (21) der Tragbalken (5) angeordnet ist, während sich die restliche Anzahl nahe dem hinteren Rand (26) der Tragbalken (5) befindet.

18. Kreiselegge nach einem oder mehreren der Ansprüche 1 bis 17, ***dadurch gekennzeichnet**,* daß das Anbaugestell (2) großteils mittels Rohren (44) mit rechteckigem Querschnitt hergestellt ist.

19. Kreiselegge nach einem oder mehreren der Ansprüche 1 bis 18, ***dadurch gekennzeichnet**,* daß sich das Anbaugestell (2) zumindest im wesentlichen symmetrisch in bezug auf eine sich in der Mitte zwischen den äußeren Enden der Tragbalken (5) erstreckende, in Arbeitsrichtung (6) ausgerichtete vertikale Mittelebene (43), erstreckt.

20. Kreiselegge nach einem oder mehreren der Ansprüche 1 bis 19, ***dadurch gekennzeichnet**,* daß das Anbaugestell (2) eine Stütze (46) umfaßt, auf welcher das zentrale Gehäuse (45) angeordnet ist.

21. Kreiselegge nach einem oder mehreren der Ansprüche 1 bis 20, ***dadurch gekennzeichnet**,* daß sich die Eingangswelle (47) des zentralen Gehäuses (45) zumindest im wesentlichen in einer sich in der Mitte zwischen den äußeren Enden der Tragbalken (5) erstreckenden, in Arbeitsrichtung (6) ausgerichteten vertikalen Mittelebene (43) befindet.

22. Kreiselegge nach einem oder mehreren der Ansprüche 1 bis 21, ***dadurch gekennzeichnet**,* daß das zentrale Gehäuse (45) jedes der beiden seitlichen Gehäuse (17) mittels einer entsprechenden Teleskopwelle (52) mit Kardangelenken, die sich quer zur Arbeitsrichtung (6) erstreckt, antreibt.

23. Kreiselegge nach einem oder mehreren der Ansprüche 1 bis 22, ***dadurch gekennzeichnet**,* daß jedes seitliche Gehäuse (17), in Draufsicht, zumindest im wesentlichen in der Mitte des entsprechenden Tragbalkens (5) befestigt ist.

24. Kreiselegge nach einem oder mehreren der Ansprüche 1 bis 23, ***dadurch gekennzeichnet**,* daß die beiden Tragbalken (5) zumindest im wesentlichen die gleiche Länge und zumindest im wesentlichen die gleiche Anzahl von Rotoren (14) haben.

25. Kreiselegge nach einem oder mehreren der Ansprüche 1 bis 24, ***dadurch gekennzeichnet**,* daß jeder Tragbalken (5) mit einer Walze (9) versehen ist, die in den hinteren Enden eines seitlichen Armes (10) und eines mittleren Armes (11) geführt ist, deren vordere Enden mit dem Tragbalken (5) verbunden sind.

26. Kreiselegge nach Anspruch 25, ***dadurch gekennzeichnet**,* daß sie einen einzigen mittleren Arm (11) aufweist, in dessen hinterem Ende die zentralen Enden der beiden Walzen (9) geführt sind.
